# EUROPÄISCHE PATENTSCHRIFT

(11) **EP 2 459 480 B1**
(45) Veröffentlichungstag und Bekanntmachung des Hinweises auf die Patenterteilung: **07.05.2014**
(21) Anmeldenummer: 10728652.8
(22) Anmeldetag: 25.06.2010
(51) Int. Cl.: C01B 3/12, C01B 31/20, C01B 3/22

(54) **VERFAHREN UND VORRICHTUNG ZUR UMWANDLUNG VON KOHLENMONOXID UND WASSER IN KOHLENDIOXID UND WASSERSTOFF, MIT DER ABTRENNUNG EINES ODER MEHRER PRODUKTE**
METHOD AND APPARATUS FOR CONVERTING CARBON MONOXIDE AND WATER INTO CARBON DIOXIDE AND HYDROGEN, WITH REMOVAL OF ONE OR MORE PRODUCTS
PROCÉDÉ ET DISPOSITIF DE TRANSFORMATION DE MONOXYDE DE CARBONE ET D'EAU EN DIOXYDE DE CARBONE ET HYDROGÈNE AVEC LA SÉPARATION D'UN OU DE PLUSIEURS PRODUITS

(30) Priorität: 30.07.2009 DE 102009035388
(43) Veröffentlichungstag der Anmeldung: 06.06.2012
(73) Patentinhaber: Siemens Aktiengesellschaft, 80333 München (DE)
(72) Erfinder: BALDAUF, Manfred, 91056 Erlangen (DE); GRAEBER, Carsten, 91056 Erlangen (DE); HANEBUTH, Marc, 22297 Hamburg (DE); ZIMMERMANN, Gerhard, 91315 Höchstadt/Aisch (DE)
(86) Internationale Anmeldenummer: PCT/EP2010/059094
(87) Internationale Veröffentlichungsnummer: WO 2011/012385

(56) Entgegenhaltungen:
- EP-B1- 0 299 995
- WO-A2-2006/098854
- US-A- 4 137 298
- US-A- 4 372 833
- US-A1- 2004 028 603

## Beschreibung

Die Erfindung betrifft allgemein die Kohlenmonoxid-Shift-Reaktion **CO+H₂O → CO₂ +H₂.** Es wird die großtechnische Nutzung dieser Reaktion betrachtet.

Die Kohlenmonoxid-Shift-Reaktion gehört zu den wichtigsten Reaktionen der chemischen Industrie. Kürzlich ist diese chemische Reaktion auch für Kraftwerke mit fossilen Brennstoffen wichtig geworden. Der Hintergrund dafür ist der aktuelle Trend der kohlendioxidarmen Stromerzeugung mit fossilen Kraftwerken auf Basis fossiler Brennstoffe. Dabei lässt sich die Kohlenmonoxid-Shift-Reaktion mit gleichzeitiger Abtrennung des gebildeten Kohlendioxids kombinieren. Nach dem derzeitigen Stand der Technik sind drei grundlegende Ansätze möglich: Pre-Combustion, Post-Combustion und Oxyfuel.

Bei dem Ansatz der Pre-Combustion - CO₂ capture muss vor der Verbrennung das Kohlenmonoxid in Kohlendioxid entsprechend der chemischen Gleichung der Kohlenmonoxid-Shift-Reaktion umgewandelt werden, um den gesamten Kohlenstoffanteil in Form von Kohlendioxid abtrennen zu können. Dabei wird der Großteil der Energie des Kohlenmonoxids auf in einer Gasturbine nutzbaren Wasserstoff übertragen, "geshiftet".

Nachteilig ist dabei, dass in der Gasphase eine Abtrennung der beiden Produkte Wasserstoff und Kohlendioxid energieaufwändig ist.

Eine häufig vertretene Kombination nach dem Stand der Technik zeigt den Pre-Combustion-Ansatz mit Kohlendioxid-Abtrennung kombiniert mit der Kohlenmonoxid-Shift-Reaktion in der Gasphase. Dabei wird ein Synthesegas im Gemisch mit Wasserdampf an Katalysatoren bei Temperaturen im Bereich von 300-500°C "geshiftet". Anschließend erfolgt in einem zweiten Teilprozess die Abtrennung des Kohlendioxids durch eine physikalische Gaswäsche, beispielsweise eine Rectisol-Wäsche. Hier wird das Kohlendioxid in gekühltem Methanol bei etwa -40°C absorbiert. Da diese tiefen Temperaturen nötig sind, um das Kohlendioxid ausreichend abtrennen zu können, muss für die Abkühlung ein großer Energiebetrag aufgewendet werden, der den Gesamtwirkungsgrad des Kraftwerkes erniedrigt.

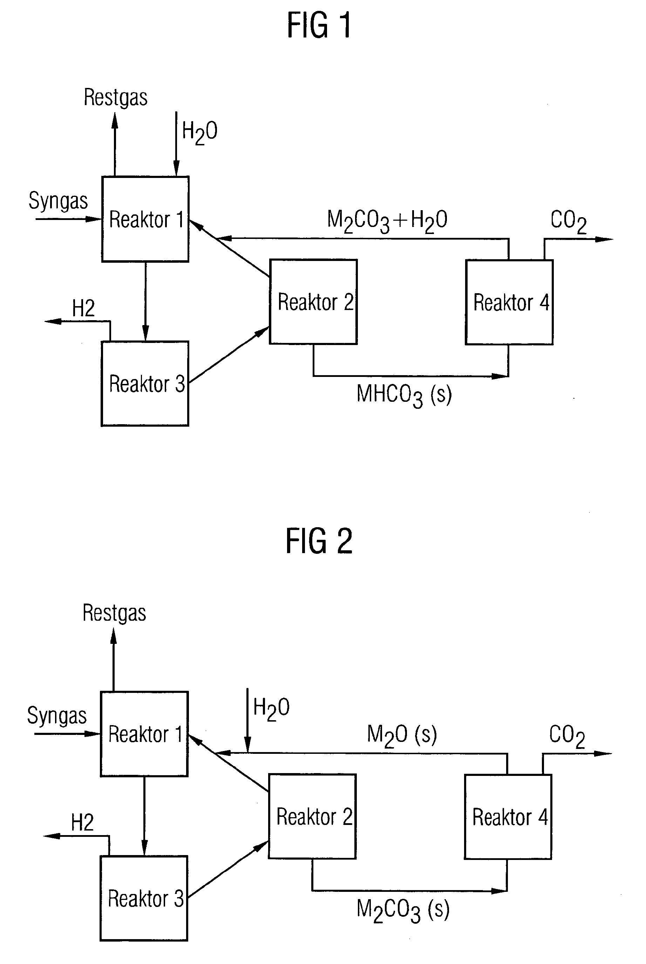

Aus der europäischen Patentschrift EP 0 299 995 B1 ist ein Verfahren zur Wandlung von Kohlenmonoxid und Wasser zu Kohlendioxid und Wasserstoff bekannt. Die darin beschriebene Kombination einer Kohlenmonoxid-Shift-Reaktion mit gleichzeitiger Abtrennung des gebildeten Kohlendioxids von den Brenngasen wird in flüssiger Phase realisiert. Insbesondere sind hier das Beispiel Nr. 6, sowie die Figur 2 der Patentschrift zu nennen. Bei diesem Verfahren wird wasserhaltiges Methanol mit etwa 2% Wassergehalt als Lösungsmittel verwendet, wobei dessen pH-Wert durch die Zugabe eines Carbonats wie beispielsweise Kaliumcarbonat erhöht ist. Die chemischen Reaktionen, die jeweils räumlich getrennt ablaufen können, sind dabei folgende:

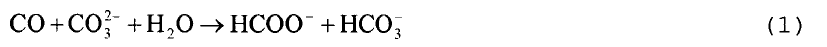

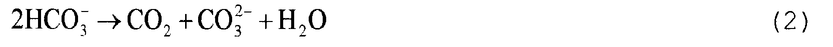

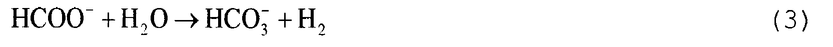

Im ersten Schritt entsprechend Gleichung (1) wird Kohlenmonoxid aus der Gasphase in einer Lösung gebunden und von den Begleitkomponenten des Synthesegases getrennt. Anschließend erfolgt eine thermische Zersetzung des gelösten entsprechend Gleichung (1) und (3) gebildeten Hydrogencarbonats 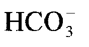 durch Erhöhung der Temperatur auf mindestens 150°C, wobei Kohlendioxid gebildet wird und möglichst vollständig abgetrennt werden soll. Die Reaktionen entsprechend den Gleichungen (1), (2) und (3) erfolgen in jeweils einem Reaktor mit gleicher Nummerierung. Als letzter Schritt wird das gebildete Formiat **HCOO⁻** aus der Gleichung (1) entsprechend der Gleichung (3) zersetzt und Wasserstoff wird gebildet. Wasserstoff wird entsprechend der Gleichung (3) in einem weiteren Schritt räumlich getrennt vom Kohlendioxid aus dem Prozess ausgeschleust.

Es hat sich gezeigt, dass der Prozess entsprechend der Patentschrift EP 0 299 995 B1 für die vorliegende Anwendung nicht ausreichend ist.

So kann beispielsweise in einem zweiten Reaktor das Kohlendioxid nicht ausreichend abgetrennt werden. Kohlendioxid wird stattdessen mit einem Teil des Wasserstoffs und der Restgase ausgetragen. Mit dem Austreiben des Kohlendioxids im zweiten Reaktor geht weiterhin ein großer Anteil des Lösungsmittels Methanol verloren. Dieses muss wieder zurück gewonnen werden, beispielsweise durch eine Wasserwäsche mit anschließender Destillation. Damit sind jedoch erhöhte verfahrenstechnische und energetische Aufwendungen notwendig.

Die Wasserstoffverluste, die mit dem Kohlendioxidstrom im Prozess mitgeführt und nicht abgetrennt werden, belaufen sich auf ca. 8%. Diese Verluste führen zu einem sehr unwirtschaftlichen Betrieb des Kraftwerks mit Kohlendioxid-Abtrennung nach diesem Prozess.

Bezogen auf die Gleichungen (1) und (3) wird somit eine relativ geringe Ausbeute bei der Kohlendioxid-Abtrennung bzw. der Wasserstoffgewinnung erzielt, da die beiden Gase nicht mit ausreichender Reinheit abgetrennt werden, sondern teilweise am Ausgang des jeweils anderen Gases mit erscheinen.

Der Erfindung liegt die Aufgabe zugrunde, ein Verfahren sowie eine Vorrichtung bereitzustellen zur Durchführung der Kohlenmonoxid-Shift-Reaktion mit verbessertem Gesamtwirkungsgrad. Die Lösung dieser Aufgabe entspricht jeweils einer Merkmalskombination eines unabhängig formulierten Patentanspruchs. Vorteilhafte Ausgestaltungen sind den abhängigen Ansprüchen zu entnehmen.

Der Erfindung liegt die Erkenntnis zugrunde, dass die thermische Zersetzung des Hydrogencarbonats 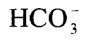 bzw. des Carbonats 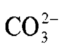 und die Austreibung des Kohlendioxids **CO₂** nicht jeweils vollständig in der methanolischen Lösung des zweiten Reaktors durchgeführt werden können, da diese Lösung auch andere gelöste Gase enthält. Dies betrifft insbesondere Wasserstoff aus dem Synthesegas oder Wasserstoffreste, die bei der Formiatzersetzung nicht desorbiert werden konnten. Diese Gase führen zu einer Verdünnung des Kohlendioxids und auf der Wasserstoffseite zu einem Verlust an Brennstoff.

Durch die Erfindung werden die Reaktionsbedingungen derart angepasst, dass entweder ein Hydrogencarbonat oder ein Carbonat Fällungsreaktor in fester Form ausgefällt wird. Aus der Reaktionsmischung kann ein Feststoff abgetrennt werden und anschließend in einem zusätzlichen vierten Reaktor zur Austreibung von Kohlendioxid zersetzt werden. Die Kohlenmonoxid-Shift-Reaktion wird dabei in flüssiger Phase durchgeführt. Die Bildung der beiden Gase Wasserstoff und Kohlendioxid läuft dabei an unterschiedlichen Orten ab, wodurch deren Darstellung folglich getrennt voneinander, erzielbar ist. Der Energiebedarf eines derartig gestalteten Verfahrens ist niedriger als der einer Kohlenmonoxid-Shift-Reaktion in der Gasphase mit anschließender Trennung von Wasserstoff und Kohlendioxid.

Sollte die Zersetzung des Feststoffes, ein Hydrogencarbonat oder ein Carbonat, nicht ohne Weiteres ablaufen, so kann die Auflösung des Festkörpers in einem Lösungsmittel vorangestellt werden, welches einen möglichst hohen Siedepunkt aufweist wie Wasser, um hohe Lösungsmittelverluste zu verhindern.

Eine bevorzugte Ausfällung des Hydrogencarbonats kann beispielsweise durch Temperaturerniedrigung im Fällungsreaktor vorteilhaft herbeigeführt werden.

Die Verwendung einer gesättigten Hydrogencarbonatlösung führt dazu, dass im ersten Reaktor und im dritten Reaktor gebildetes Hydrogencarbonat nicht gelöst werden kann und somit von selbst ausfällt.

Die Ausfällung kann weiterhin durch Zusatz von apolarem, jedoch mit dem ersten Lösungsmittel mischbarem, zweiten Lösungsmittel erfolgen, wobei das zweite Lösungsmittel als Fällungsmittel für Salze dient. Nach der Fällung können entsprechende Zusätze wieder abdestilliert werden.

Eine weitere vorteilhafte Möglichkeit zur Ausfällung des Hydrogencarbonats liegt in der Zugabe eines gut löslichen Salzes mit dem gleichen Kation wie im Hydrogencarbonat vorhanden ist. Somit wird das Löslichkeitsprodukt des Hydrogencarbonatsalzes bereits bei niedriger Hydrogencarbonat-Konzentration erreicht.

Es ist weiterhin besonders vorteilhaft, aus dem vierten Reaktor zur thermischen Zersetzung des Hydrogencarbonats bzw. des Carbonats das entstehende Carbonat bzw. festes Metalloxid zum ersten Reaktor zurückzuführen. Damit schließt sich ein Carbonatkreislauf bzw. ein Stoffkreislauf.

Im Folgenden werden anhand von schematischen Figuren die Erfindung nicht einschränkende Ausführungsbeispiele beschrieben.

Die Figuren zeigen im Einzelnen:
- Figur 1: zeigt eine Anordnung von vier Reaktoren, wobei im zweiten Reaktor ein festes Hydrogencarbonat abgetrennt wird, welches im vierten Reaktor unter Kohlendioxidfreisetzung thermisch zersetzt wird,
- Figur 2: zeigt eine Anordnung von vier Reaktoren entsprechend Figur 1, wobei ein Carbonat als Feststoff im zweiten Reaktor abgetrennt und im vierten Reaktor zersetzt wird und ebenfalls Kohlendioxid freigesetzt wird,
- Figur 3: zeigt eine Auflistung der Gleichungen (1), (2) und (3), wobei diese drei Gleichungen in Summe die Kohlenmonoxid-Shift-Reaktion darstellen, wie sie im Stand der Technik bekannt ist.

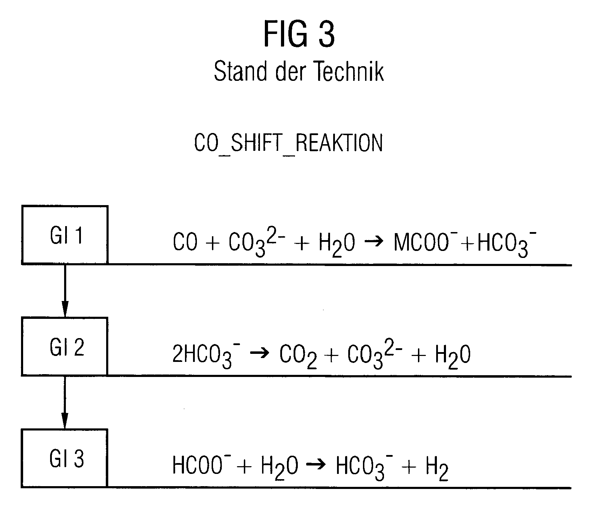

In Figur 3 sind basierend auf den Reaktionen nach den Gleichungen (1), (2) und (3) weitere Reaktionsgleichungen angegeben, dafür, wie in einem ersten Reaktor, zweiten Reaktor und dritten Reaktor die Kohlenmonoxid-Shift-Reaktion abläuft. Entsprechend dem gesamten System an Gleichungen geschieht eine Formiatbildung bei gleichzeitiger Bildung von Hydrogencarbonat. Entsprechend Gleichung (3) geschieht eine Umsetzung von Formiat mit Wasser zu Hydrogencarbonat und Wasserstoff. Entsprechend Gleichung (2) wird Hydrogencarbonat an anderer Stelle im Reaktionsablauf unter Freisetzung von Kohlendioxid zersetzt.

Da in dem ersten Reaktor 1, abhängig von den herrschenden Bedingungen, prinzipiell auch Formiatsalze ausfallen können, ist eine Änderung der Reaktionsreihenfolge vorteilhaft. Bei einer ersten Variante laufen folgende Reaktionen ab.

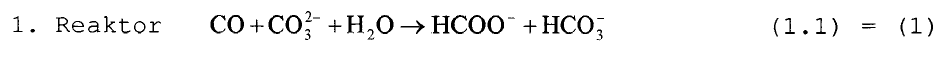

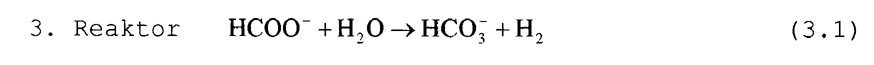

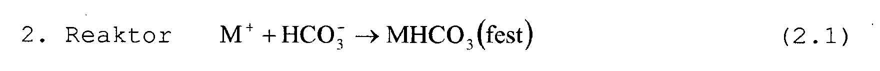

4. Reaktor **2MHCO₃(fest)→CO₂+M₂CO₃(fest)+H₂O** (4.1)

Die Reaktionsgleichungen 2.1 und 4.1 sind exemplarisch für den Einsatz von Alkalimetallonen formuliert. Andere Kationen können gleichermaßen für die Durchführung der Reaktionen geeignet sein, wobei sich die Reaktionsgleichungen 2.1 und 4.1 dann dementsprechend ändern.

Lösungsmittel und darin gelöste Bestandteile aus dem zweiten Reaktor 2 sowie nicht-gasförmige Komponenten aus dem vierten Reaktor 4 können in den ersten Reaktor 1 rückgeführt werden

Im zusätzlich entsprechend der Erfindung eingeführten vierten Reaktor 4 erfolgt nach einem optionalen Trocknen des Niederschlags aus dem zweiten Reaktor 2 eine thermische Zersetzung entsprechend Gleichung 4.1. Das Carbonat **M₂CO₃** wird zusammen mit dem Wasser in den zurückgeführten Strom des zweiten Reaktors 2 zum ersten Reaktor 1 gebracht, sodass dadurch der Carbonatkreislauf geschlossen ist. Das vorgestellte Verfahren kann auch mit anderen Kationen in analoger Weise durchgeführt werden, beispielsweise mit dem Ammoniumion oder Erdalkalimetallionen.

Eine weitere Anpassung des Verfahrens sieht vor, dass anstelle eines schwach alkalischen Carbonat-Puffersystems eine stark alkalische Lösung von Hydroxiden verwendet wird. Dadurch ändern sich die Teilreaktionen nochmals und liegen entsprechend einer zweiten Variante wie folgt vor:

1. Reaktor **CO+OH⁻ → HCOO⁻** (1.2)

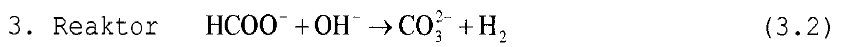

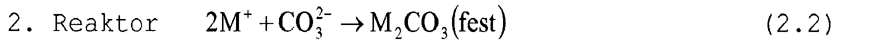

4. Reaktor **M₂CO₃(fest) → CO₂+M₂O(fest**) (4.2)

Auch die Reaktionsgleichungen 2.2 und 4.2 sind nicht einschränkend auf ein bestimmtes Alkalimetall (M) zu verstehen. Andere Kationen können gleichermaßen für die Durchführung der Reaktionen geeignet sein; die Reaktionsgleichungen ändern sich dann dementsprechend.

Bei der zweiten Variante entsprechend den Reaktionsgleichungen (1.2), (3.2), (2.2) und (4.2) erfolgt im zusätzlichen vierten Reaktor 4 nach dem Trocknen des Niederschlags aus dem zweiten Reaktor 2 eine thermische Zersetzung des Carbonats **M₂CO₃.**

Das Oxid **M₂O** wird in den zurückgeführten Strom des zweiten Reaktors 2 zum ersten Reaktor 1 eingebracht. Dort reagiert es mit Wasser zum Hydroxid, sodass dadurch der Stoffkreislauf geschlossen ist. Die entsprechende Gleichung lautet:

**M₂O+H₂O→2MOH** (5.2)

Das Reaktionssystem entsprechend der zweiten Variante hat den Vorteil, dass nach dem ersten Reaktor 1 im Lösungsmittel die Gleichgewichtskonzentration von Kohlendioxid **CO₂** wesentlich niedriger sein wird als bei der Verwendung der ersten Variante entsprechend den Gleichungen (1.1), (3.1), (2.1), (4.1). Dadurch wird die unerwünschte Desorption des Kohlendioxids zusammen mit dem in dem dritten Reaktor 3 gebildeten Wasserstoff **H₂** sehr stark zurückgedrängt und somit werden die Kohlendioxid-Verluste mit oder in den Wasserstoffstrom reduziert.

Als Lösungsmittel kann wässriges Methanol, Wasser oder auch ein polares Lösungsmittel eingesetzt werden. Bedingung ist, dass die beteiligten Salze lösbar sind.

Entsprechend der Erfindung ist vorgesehen, dass die Zersetzung des Hydrogencarbonats bzw. des Carbonats nicht in einer umgepumpten Lösung, welche auch gelöste Brenngase enthält, erfolgt, sondern nach dem Ausfällen eines Feststoffes geschieht. Der Feststoff ist, entsprechend Variante 1, das Hydrogencarbonat und entsprechend Variante 2 das Carbonat. In einem separaten Reaktor wird die Zersetzung des Feststoffes entsprechend durchgeführt. Durch diese Maßnahme können sowohl Lösungsmittelverluste als auch Brenngasverluste vermieden werden.

Zusätzlich kann in einem weiteren Schritt der pH-Bereich erhöht, und somit die Kohlendioxid-Gleichgewichtskonzentration in der Lösung deutlich verringert und gleichzeitig eine unerwünschte Kohlendioxid-Desorption mit den Restgasen im ersten Reaktor 1 oder mit dem Wasserstoff im dritten Reaktor 3 reduziert werden. Damit steigt insgesamt der Kohlendioxid-Abscheidungsgrad und die Verluste an Brenngas sinken.

In Figur 1 ist die erste Variante dargestellt, welche als Feststoff im zweiten Reaktor 2 ein Hydrogencarbonat ausbringt, das im 4. Reaktor 4 unter Kohlendioxid Freisetzung thermisch zersetzt wird.

In Figur 2 ist ein Schema entsprechend der zweiten Variante dargestellt, welches anstelle des Hydrogencarbonats ein Carbonat als Feststoff aufweist. Sowohl in Figur 1 als auch in Figur 2 ist deutlich erkennbar, dass das Brenngas Wasserstoff und das vor der Verbrennung abzutrennende Kohlendioxid an wesentlich anderen Stellen im Reaktionsablauf entfernt werden.

## Patentansprüche

1. Verfahren zur Umwandlung von Kohlenmonoxid CO und Wasser H₂O in Kohlendioxid CO₂ und Wasserstoff H₂, umfassend zumindest folgende Schritte:
- Kohlenmonoxid CO wird aus der Gasphase in einem ersten Lösungsmittel gebunden und Formiat HCOO⁻ wird gebildet,
- das Formiat HCOO⁻ wird zersetzt und entstehender Wasserstoff H₂ wird abgetrennt, wobei
- entweder ein gebildetes Hydrogencarbonat oder ein gebildetes Carbonat jeweils ausgefällt und abgetrennt wird, und
- eine thermische Zersetzung des festen Hydrogencarbonats oder des festen Carbonats vorgesehen ist, sowie ein jeweiliges Abtrennen des Kohlendioxids CO₂ daraus erfolgt, wobei
- in einem ersten Reaktor (1) Kohlenmonoxid CO aus der Gasphase in einem ersten Lösungsmittel, gebunden wird,
- gebildetes Formiat HCOO⁻ in einem dritten Reaktor (3) zersetzt wird und entstehender Wasserstoff H₂ abgetrennt wird,
- ausgefälltes Hydrogencarbonat in einem zweiten Reaktor (2) abgetrennt wird, und
- die thermische Zersetzung des festen Hydrogencarbonats, sowie das Austreiben des Kohlendioxids CO₂ in einem vierten Reaktor (4) geschieht.

2. Verfahren nach Anspruch 1, wobei
das erste Lösungsmittel stark alkalisch ist.

3. Verfahren nach einem der Ansprüche 1 oder 2, **dadurch gekennzeichnet, dass** das Abtrennen des Kohlendioxids CO₂ in einem zweiten von dem ersten Lösungsmittel unterschiedlichen Lösungsmittel durchgeführt wird.

4. Verfahren nach Anspruch 3, **dadurch gekennzeichnet, dass** das zweite Lösungsmittel keine Methanolanteile aufweist.

5. Verfahren nach Anspruch 1, **dadurch gekennzeichnet, dass** die Ausfällung des Hydrogencarbonats durch TemperaturErniedrigung geschieht.

6. Verfahren nach Anspruch 1, **dadurch gekennzeichnet, dass** eine gesättigte Hydrogencarbonatlösung eingesetzt wird, sodass im ersten Reaktor (1) und im dritten Reaktor (3) gebildetes Hydrogencarbonat nicht gelöst werden kann und ausfällt.

7. Verfahren nach einem der Ansprüche 1 bis 6, **dadurch gekennzeichnet, dass** ein im vierten Reaktor (4) gebildeter Feststoff mit Wasser H₂O vom vierten Reaktor (4) in den ersten Reaktor (1) zurückgeführt wird.

8. Verfahren nach einem der Ansprüche 1 bis 7, **dadurch gekennzeichnet, dass** eine stark alkalische Lösung von Hydroxiden verwendet wird, sodass sich die Teilreaktionen in den einzelnen Reaktoren wie folgt darstellen:
1. Reaktor CO + OH⁻ → HCOO⁻ (1.2) 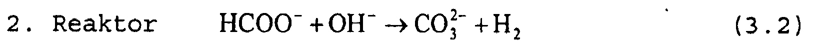 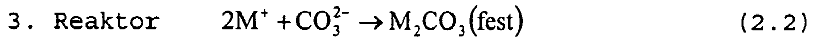
4. Reaktor M₂CO₃(fest) → CO₂ + M₂O(fest) (4.2)
wobei M ein beliebiges einwertiges Kation ist.

9. Verfahren nach Anspruch 7 oder 8, **dadurch gekennzeichnet, dass** das Oxid M₂O in den zurückgeführten Strom vom vierten Reaktor (4) zum ersten Reaktor (1) gebracht wird und zu einem Hydroxid reagiert, sodass die Gleichgewichtskonzentration von Kohlendioxid hinter dem ersten Reaktor (1) im Lösungsmittel erniedrigt wird.

10. Vorrichtung zur Umwandlung von Kohlenmonoxid CO und Wasser H₂O in Kohlendioxid CO₂ und Wasserstoff H₂, **dadurch gekennzeichnet, dass**
- ein erster Reaktor (1) vorhanden ist zur Bindung von Kohlenmonoxid CO aus der Gasphase in einem ersten Lösungsmittel,
- ein dritter Reaktor (3) vorhanden ist, der im Wesentlichen zur Zersetzung von Formiat HCOO⁻ dient,
- ein zweiter Reaktor (2) vorhanden ist, zur Ausfällung von entweder einem Salz eines Hydrogencarbonats 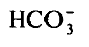 oder eines Carbonats 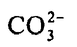 als Feststoff, und
- ein vierter Reaktor (4) vorhanden ist, der im Wesentlichen zur thermischen Zersetzung des gebildeten Feststoffs dient und Kohlendioxid CO₂ abspaltbar ist.

## Claims

1. Process for converting carbon monoxide **CO** and water **H₂O** into carbon dioxide **CO₂** and hydrogen **H₂,** which comprises at least the following steps:
- carbon monoxide **CO** is bound from the gas phase in a first solvent and formate **HCOO⁻** is formed,
- the formate **HCOO⁻** is decomposed and hydrogen **H₂** formed is separated off, wherein
- either a hydrogencarbonate formed or a carbonate formed is in each case precipitated and separated off and
- the solid hydrogencarbonate or the solid carbonate is thermally decomposed and the carbon dioxide **CO₂** is separated off therefrom, wherein
- carbon monoxide **CO** is bound from the gas phase in a first solvent in a first reactor (1),
- formate **HCOO⁻** formed is decomposed in a third reactor (3) and hydrogen **H₂** formed is separated off,
- precipitated hydrogencarbonate is separated off in a second reactor (2) and
- the thermal decomposition of the solid hydrogencarbonate and the driving-off of the carbon dioxide **CO₂** occur in a fourth reactor (4).

2. Process according to Claim 1, wherein the first solvent is strongly alkaline.

3. Process according to either of Claims 1 and 2, **characterized in that** the removal of the carbon dioxide **CO₂** is carried out in a second solvent which is different from the first solvent.

4. Process according to Claim 3, **characterized in that** the second solvent does not comprise any methanol.

5. Process according to Claim 1, **characterized in that** the precipitation of the hydrogencarbonate is effected by decreasing the temperature.

6. Process according to Claim 1, **characterized in that** a saturated hydrogencarbonate solution is used so that hydrogencarbonate formed in the first reactor (1) and in the third reactor (3) cannot be dissolved and precipitates.

7. Process according to any of Claims 1 to 6, **characterized in that** a solid formed in the fourth reactor (4) is recirculated together with water **H₂O** from the fourth reactor (4) to the first reactor (1).

8. Process according to any of Claims 1 to 7, **characterized in that** a strongly alkaline solution of hydroxides is used so that the subreactions in the individual reactors are as follows:
1st reactor **CO + OH⁻ → HCOO⁻** (1.2) 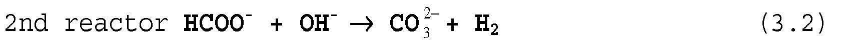 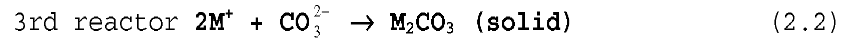
4^{th} reactor **M₂CO₃ (solid) → CO₂ + M₂O(soild)** (4.2)
where M is any monovalent cation.

9. Process according to Claim 7 or 8, **characterized in that** the oxide **M₂O** is introduced into the recirculated stream from the fourth reactor (4) to the first reactor (1) and reacts to form a hydroxide so that the equilibrium concentration of carbon dioxide in the solvent downstream of the first reactor (1) is decreased.

10. Apparatus for converting carbon monoxide **CO** and water **H₂O** into carbon dioxide **CO₂** and hydrogen **H₂, characterized in that**
- a first reactor (1) is present for the binding of carbon monoxide **CO** from the gas phase in a first solvent,
- a third reactor (3) which serves essentially for the decomposition of formate **HCOO⁻** is present,
- a second reactor (2) is present for the precipitation of either a salt of a hydrogencarbonate 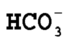 or a carbonate 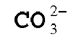 as solid and
- a fourth reactor (4) which serves essentially for the thermal decomposition of the solid formed and enables carbon dioxide **CO₂** to be eliminated is present.

## Revendications

1. Procédé de transformation de monoxyde de carbone CO et d'eau H₂O en dioxyde de carbone CO₂ et en hydrogène H₂, comprenant au moins les étapes suivantes :
- du monoxyde de carbone CO issu de la phase gazeuse est lié dans un premier solvant et du formiate HCOO⁻ est formé,
- le formiate HCOO⁻ est décomposé et l'hydrogène H₂ qui en résulte est séparé, dans lequel
- soit un hydrogénocarbonate formé soit un carbonate formé est respectivement précipité et séparé, et
- une décomposition thermique de l'hydrogénocarbonate solide ou du carbonate solide est prévue, et une séparation correspondante du dioxyde de carbone CO₂ en résulte, dans lequel
- dans un premier réacteur (1) le monoxyde de carbone CO issu de la phase gazeuse est lié dans un premier solvant,
- du formiate HCOO⁻ formé est décomposé dans un troisième réacteur (3) et l'hydrogène H₂ qui en résulte est séparé,
- l'hydrogénocarbonate précipité dans un deuxième réacteur (2) est séparé, et
- la décomposition thermique de l'hydrogénocarbonate solide ainsi que l'expulsion du dioxyde de carbone CO₂ se produisent dans un quatrième réacteur (4).

2. Procédé selon la revendication 1, dans lequel le premier solvant est fortement alcalin.

3. Procédé selon l'une des revendications 1 ou 2, **caractérisé en ce que** la séparation du dioxyde de carbone CO₂ est réalisée dans un deuxième solvant différent du premier solvant.

4. Procédé selon la revendication 3, **caractérisé en ce que** le deuxième solvant ne présente pas de fractions méthanol.

5. Procédé selon la revendication 1, **caractérisé en ce que** la précipitation de l'hydrogénocarbonate se produit par le biais d'une baisse de la température.

6. Procédé selon la revendication 1, **caractérisé en ce qu'**une solution d'hydrogénocarbonate saturée est utilisée, de sorte que dans le premier réacteur (1) et dans le troisième réacteur (3) l'hydrogénocarbonate formé ne peut pas être dissous et précipite.

7. Procédé selon l'une des revendications 1 à 6, **caractérisé en ce qu'**une matière solide formée dans le quatrième réacteur (4) est ramenée avec de l'eau H₂O du quatrième réacteur (4) dans le premier réacteur (1).

8. Procédé selon l'une des revendications 1 à 7, **caractérisé en ce qu'**une solution fortement alcaline d'hydroxydes est utilisée, de sorte que les réactions partielles dans les différents réacteurs s'établissent comme suit :
1er réacteur **CO + OH⁻ → HCOO⁻** (1.2) 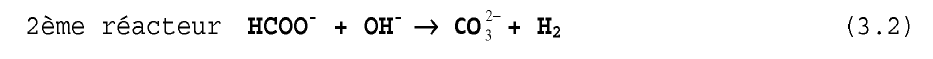 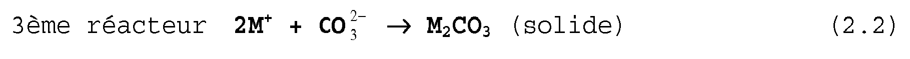
4ème réacteur **M₂CO₃(solid) → CO₂ + M₂O** (solid) (4.2)
dans lequel M est un cation monovalent quelconque.

9. Procédé selon la revendication 7 ou 8, **caractérisé en ce que** l'oxyde M₂O est placé dans le flux ramené du quatrième réacteur (4) au premier réacteur (1) et réagit pour donner un hydroxyde, de sorte que la concentration à l'équilibre de dioxyde de carbone à la suite du premier réacteur (1) est réduite dans le solvant.

10. Dispositif de transformation de monoxyde de carbone CO et d'eau H₂O en dioxyde de carbone CO₂ et en hydrogène H₂, **caractérisé en ce que**
- un premier réacteur (1) est présent pour la liaison du monoxyde de carbone CO issu de la phase gazeuse dans un premier solvant,
- un troisième réacteur (3) est présent, qui sert pour l'essentiel à la décomposition du formiate HCOO⁻,
- un deuxième réacteur (2) est présent pour la précipitation soit d'un sel d'un hydrogénocarbonate 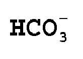 soit d'un carbonate 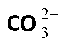 en tant que matière solide, et
- un quatrième réacteur (4) est présent, qui sert pour l'essentiel à la décomposition thermique de la matière solide formée, et du dioxyde de carbone CO₂ peut être séparé.
